# EUROPEAN PATENT APPLICATION

(11) **EP 4 664 599 A1**
(43) Date of publication of application: **17.12.2025**
(21) Application number: 24819443.3
(22) Date of filing: 06.02.2024
(51) Int. Cl.: H01M 10/42, H01M 50/242, H01M 10/48, H01M 50/204, H01M 50/383, H01M 10/658, H01M 50/249, H01M 50/367

(54) **BATTERY MODULE, BATTERY PACK, AND VEHICLE COMPRISING SAME**

(30) Priority: 09.06.2023 KR 20230074501
(71) Applicant: LG Energy Solution, Ltd., Seoul 07335 (KR)
(72) Inventor: PARK, Jeong-Hoon, Daejeon 34122 (KR)
(74) Representative: Plasseraud IP
(86) International application number: PCT/KR2024/001761
(87) International publication number: WO 2024/253289

(57) **Abstract**

The present disclosure relates to a battery module that includes: a cell stack including a plurality of battery cells arranged to be stacked in one direction; a module case configured to accommodate the cell stack; a venting hole formed on the module case and configured to discharge gas generated from the battery cell to the outside of the module case; and a cartridge having at least a portion coupled to the module case and configured to release carbon dioxide stored therein toward the venting hole.

## Description

### TECHNICAL FIELD

The present disclosure relates to a battery module, a battery pack, and a vehicle including the same, and more specifically, it relates to a battery module and a battery pack capable of suppressing generation of flame by detecting gas generated from a battery cell, and a vehicle including the same.

The present application claims priority to Korean Patent Application No. 10-2023-0074501 filed on June 09, 2023 in the Republic of Korea, the disclosures of which are incorporated herein by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. If a higher output voltage is required, a battery module or battery pack may be configured by connecting a plurality of battery cells in series. In addition, a battery module or battery pack may be configured by connecting multiple battery cells in parallel in order to increase the charge/discharge capacity. Accordingly, the number of battery cells included in the battery module or battery pack may be set in various ways depending on the required output voltage or charge/discharge capacity.

Meanwhile, a common method for configuring a battery pack by connecting a plurality of battery modules in series/parallel is to preferentially configure a battery module including at least one battery cell and then add other elements using the at least one battery module, thereby configuring a battery pack or battery rack. Alternatively, a battery pack may be configured by connecting a plurality of battery cells in series/parallel.

In the case of a conventional battery pack, the internal temperature may rise due to abnormalities or misuse of the battery cell, which may result in an increase in the internal pressure of the battery cell. Due to this internal pressure, high-temperature gas may vent from the battery cell. In this case, the high-temperature venting gas may continue to accumulate heat inside the battery module or battery pack, leading to rapid thermal propagation between battery cells.

As a result, battery cells ignite simultaneously, making it difficult to suppress the thermal event, so that the battery module or battery pack may explode, causing further damage.

In addition, generally, when gas is ejected from the battery cell, pieces of electrode plates or active materials inside the battery cell may be heated to a high temperature and discharged to the outside, and these high-temperature particles may appear in the form of sparks. In this case, if the sparks react with oxygen when they are emitted, the oxygen may ignite to make a flame or develop into a fire.

Meanwhile, in such a conventional battery module or battery pack, a plurality of venting holes is provided on one side of a module case or pack case to prevent internal heat accumulation. For example, the high-temperature gas emitted from a trigger battery cell where an event occurred is discharged in a specific direction through a specific venting hole at a position corresponding to the trigger battery cell, among a plurality of venting holes, thereby preventing heat accumulation inside the battery module or battery pack.

Furthermore, when a thermal event occurs in a specific battery cell, the battery module or battery pack is required to prevent high-temperature gas or sparks from reacting with oxygen to make flame by removing at least one of the elements that cause flame, such as fuel, oxygen, and heat.

### DISCLOSURE

### Technical Problem

The present disclosure has been designed to solve the problems of the related art, and therefore the present disclosure is directed to providing a battery module capable of ensuring safety and reliability by suppressing flames from occurring inside the module case in the event of an abnormality in the battery cell.

The present disclosure is also directed to providing a battery module capable of ensuring safety and reliability by suppressing flames from occurring inside the pack case in the event of an abnormality in the battery cell.

The present disclosure is also directed to providing a vehicle with improved safety by including a battery module or battery pack described above.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery module that includes: a cell stack including a plurality of battery cells arranged to be stacked in one direction; a module case configured to accommodate the cell stack; a venting hole formed on the module case and configured to discharge gas generated from the battery cell to the outside of the module case; and a cartridge having at least a portion coupled to the module case and configured to release carbon dioxide stored therein toward the venting hole.

The venting hole may be provided on one side of the module case, and the cartridge may be provided on the other side of the module case so as to face the venting hole.

The module case may include a module-bottom plate configured to support the plurality of battery cells at the bottom of the cell stack and having the venting hole formed thereon, and a module-top plate coupled to the module-bottom plate and to which at least a portion of the cartridge is coupled.

The venting hole and the cartridge may be disposed in a straight line in the vertical direction.

The cell stack may include a plurality of blocking members arranged in one direction between at least one of the plurality of battery cells, and a plurality of venting holes may be provided between adjacent blocking members among the plurality of blocking members.

A plurality of cartridges may be provided to respectively face the plurality of venting holes.

The plurality of venting holes and cartridges may be provided on at least one side of the cell stack.

The battery module of the present disclosure may further include a bus-bar frame assembly provided inside the module case and configured to cover at least one side of the cell stack, and the plurality of venting holes and cartridges may be provided inward from the bus-bar frame assembly.

The battery module may further include a gas sensor provided inside the module case and configured to detect gas generated from the battery cell, and if the gas sensor detects the generation of the gas, carbon dioxide stored inside the cartridge may be released toward the venting hole.

The cartridge may include a cylinder unit including a storage portion having a space for storing carbon dioxide therein and a release portion extending from the storage portion and configured to release carbon dioxide.

The diameter of the release portion may be smaller than the diameter of the storage portion.

The cartridge may further include an operation unit connected to the cylinder unit and configured to cause the cylinder unit to release carbon dioxide if the gas sensor detects the generation of the gas.

The operation unit may be configured to be electrically connected to the gas sensor.

In addition, according to an embodiment of the present disclosure, a battery pack including the battery module according to the present disclosure is provided.

In addition, the present disclosure provides a vehicle including the battery pack according to an embodiment of the present disclosure.

According to another aspect of the present disclosure, there is provided a battery pack including: a cell stack including a plurality of battery cells arranged to be stacked in one direction; a pack case configured to accommodate the cell stack; a venting device provided in the pack case and configured to discharge gas generated from the battery cell to the outside of the pack case; and a cartridge having at least a portion coupled to the pack case and configured to release carbon dioxide stored therein toward the venting device.

The pack case may include a pack-bottom frame configured to support the bottom of the cell stack and having the venting device, and a pack-top frame coupled to the pack-bottom frame and to which at least a portion of the cartridge is coupled.

The venting device and the cartridge may be provided to face each other in a vertical direction.

The cell stack may include a plurality of blocking members arranged in one direction between at least one of the plurality of battery cells, and a plurality of venting devices may be provided between adjacent blocking members among the plurality of blocking members.

A plurality of cartridges may be provided to respectively face the plurality of venting devices.

The plurality of venting devices and cartridges may be provided on at least one side of the cell stack.

The battery pack of the present disclosure may further include a gas sensor provided inside the pack case and configured to detect gas generated from the battery cell, and if the gas sensor detects the generation of the gas, carbon dioxide stored inside the cartridge may be released toward the venting device.

A plurality of cell stacks may be provided, and the pack case may further include a partition provided to partition the plurality of cell stacks inside the pack-bottom frame.

In addition, the present disclosure also provides a vehicle including the battery pack according to another embodiment of the present disclosure.

### Advantageous Effects

According to one aspect of the present disclosure, it is possible to ensure safety and reliability of the battery module or battery pack by suppressing the occurrence of flame inside the module case or pack case by removing elements that may cause flame in the event of an abnormality in the battery cell.

In addition, according to an aspect of the present disclosure, it is possible to prevent, in the event of an abnormality in the battery cell, sparks emitted from the battery cell from igniting oxygen, thereby suppressing the flame.

In addition, according to an aspect of the present disclosure, it is possible to quickly discharge, in the event of an abnormality in the battery cell, venting gas to the outside of the module case or pack case, thereby suppressing the flame, and maximally prevent thermal damage to other battery cells, thereby effectively securing thermal propagation prevention performance in a pack.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery module according to an embodiment of the present disclosure.
FIG. 2 is an exploded perspective view of a battery module according to an embodiment of the present disclosure.
FIG. 3 is a bottom view of a battery module according to an embodiment of the present disclosure.
FIG. 4 is a cross-sectional view of a battery module on an X-Z plane according to an embodiment of the present disclosure.
FIG. 5 is a diagram illustrating the direction in which a cartridge operates in a battery module according to an embodiment of the present disclosure.
FIG. 6 is a cross-sectional view of a battery module on an X-Y plane according to an embodiment of the present disclosure.
FIG. 7 is an exploded perspective view of a cell stack and a bus-bar frame assembly of a battery module according to an embodiment of the present disclosure.
FIG. 8 is a cross-sectional view of a battery module on a Y-Z plane according to an embodiment of the present disclosure.
FIG. 9 is a diagram illustrating a gas sensor that may be included in a battery module according to an embodiment of the present disclosure.
FIG. 10 is a diagram illustrating the detailed structure of a cartridge that may be included in a battery module according to an embodiment of the present disclosure.
FIG. 11 is a diagram illustrating the location of an operation unit of a cartridge that may be included in a battery module according to an embodiment of the present disclosure.
FIG. 12 is a perspective view of a battery pack including a battery module according to an embodiment of the present disclosure.
FIG. 13 is a perspective view of a battery pack according to another embodiment of the present disclosure.
FIG. 14 is an exploded perspective view of a battery pack according to another embodiment of the present disclosure.
FIG. 15 is a bottom view of a battery pack according to another embodiment of the present disclosure.
FIG. 16 is a diagram illustrating the direction in which a cartridge operates in a battery pack according to another embodiment of the present disclosure.
FIG. 17 is a perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted. For reference, in this specification, terms indicating directions are based on the elements shown in the attached drawings, and are relative terms that may vary depending on the postures or positions of the actual elements.

Meanwhile, although terms indicating directions such as upward, downward, left, right, forward, and backward directions are used in this specification, it is obvious to those skilled in the art that these terms are only for convenience of explanation and may vary depending on the position of the target object or the position of the observer.

For example, in the embodiment of the present disclosure, the X-axis direction shown in the drawing may indicate the forward/backward direction, the Y-axis direction may indicate the left/right direction perpendicular to the X-axis direction on the flat plane (X-Y plane), and the Z-axis direction may indicate the upward/downward direction (vertical direction) perpendicular to both the X-axis direction and the Y-axis direction.

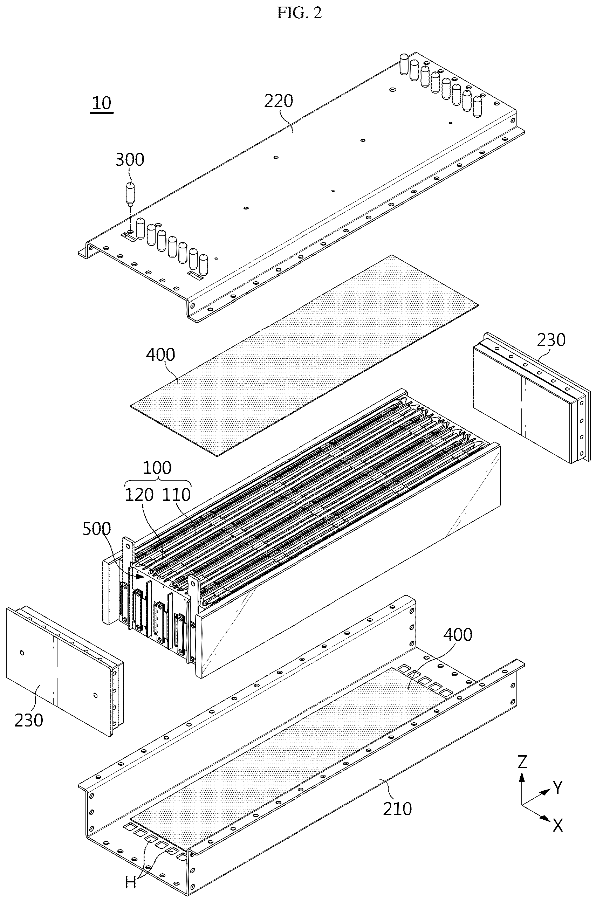

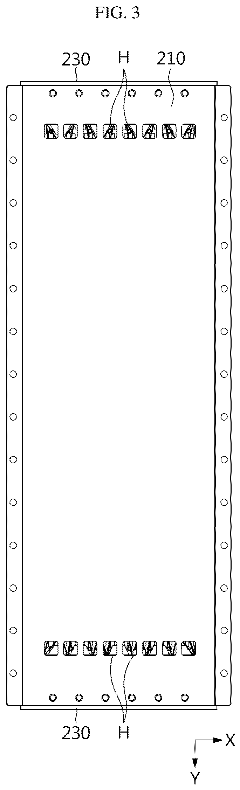

FIG. 1 is a perspective view of a battery module according to an embodiment of the present disclosure, FIG. 2 is an exploded perspective view of a battery module according to an embodiment of the present disclosure, and FIG. 3 is a bottom view of a battery module according to an embodiment of the present disclosure.

Referring to FIGS. 1 to 3, a battery module 10 according to an embodiment of the present disclosure may include a cell stack 100, a module case 200, a venting hole H, and a cartridge 300.

The cell stack 100 may include a battery cell 110. A plurality of battery cells 110 may be provided. As shown in FIG. 2 or the like, the plurality of battery cells 110 may be disposed side by side in the left/right direction (X-axis direction) while standing in the vertical direction (Z-axis direction). In this case, a sealing portion of each battery cell 110 may be directed in the forward/backward direction (Y-axis direction) and the upward/downward direction (Z-axis direction), and a storage portion may be directed in the left/right direction (X-axis direction).

The present disclosure is not limited to a specific type or form of battery cell 110, and various battery cells 110 known at the time of filing the present disclosure may be applied to configure the cell stack 100 of the present disclosure. Although the present embodiment will be described based on a pouch-type secondary battery, as shown in the drawing, that has high energy density and is easy to stack, a cylindrical or prismatic secondary battery may be applied to the battery cell 110.

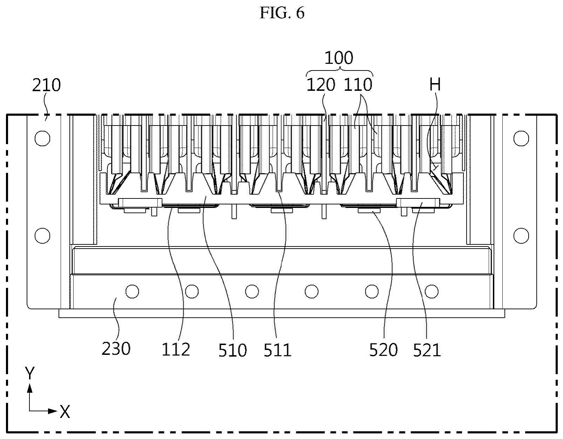

The cell stack 100 may further include a blocking member 120. The blocking member 120 may be provided between the battery cells 110. In particular, a plurality of blocking members 120 may be included in one cell stack 100. The blocking member 120 will be described in more detail with reference to FIG. 6 below.

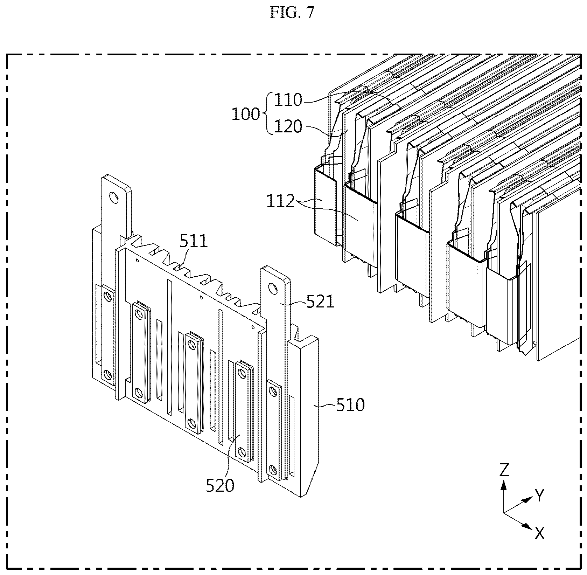

The battery module 10 of the present disclosure may further include a bus-bar frame assembly 500. The bus-bar frame assembly 500 may be provided inside the module case 200 and configured to cover at least one side of the cell stack 100. The bus-bar frame assembly 500 will be described in more detail with reference to FIGS. 6 and 7 below.

Meanwhile, referring to FIGS. 1 and 2, the module case 200 may be configured to have an inner space that accommodates the cell stack 100 therein.

In addition, the module case 200 may be configured such that the cell stack 100 is able to be inserted thereinto along one direction. For example, the cell stack 100 may be inserted into the module case 200 in the longitudinal direction (Y-axis direction). That is, the module case 200 may be configured to insert the cell stack 100 thereinto using a sliding or press-fitting manner. For press-fitting, there may be almost no gap between the upper and lower faces of the module case 200 and the upper and lower ends of the cell stack 100, and there may also be almost no gap between both side faces of the module case 200 and both side portions of the cell stack 100.

This module case 200 may be made of a metal material with rigidity and heat resistance in order to physically or chemically protect the battery cell 110 stored therein.

Meanwhile, the battery module 10 according to an embodiment of the present disclosure may include a venting hole H. The venting hole H may be configured to discharge gas generated from the battery cell 110 to the outside of the module case 200. The venting hole H may be formed on the module case 200, enabling directional venting in one direction. For example, as shown in FIG. 3, a plurality of venting holes H may be formed on the lower surface of the module case 200, enabling directional venting toward the bottom of the battery module 10 through the venting holes H.

Specifically, referring to FIG. 3, the venting holes H may be provided at regular intervals in the left/right direction (X-axis direction) on the lower surface of the module case 200 at positions close to both ends thereof in the longitudinal direction (Y-axis direction) thereof. According to the above-implemented configuration of the present disclosure, if thermal runaway occurs in one of the battery cells 110 so that gas or the like is generated, it is possible to perform directional venting in which the gas or the like vents in the downward direction from both sides of the module case 200.

The battery module 10 according to an embodiment of the present disclosure may further include a cartridge 300. The cartridge 300 may be configured to store carbon dioxide therein. The carbon dioxide may be stored in a liquid state inside the cartridge 300 under high pressure. For example, the cartridge 300 may be a commercially available product that is used to inflate tires of bicycles by injecting carbon dioxide. The cartridge 300 may be used along with an inflator or adapter.

At least a portion of the cartridge 300 may be coupled to the module case 200. The location of the cartridge 300 will be described in more detail later. The cartridge 300 may be configured to release carbon dioxide stored therein toward the venting hole H. That is, the cartridge 300 may be configured such that the gas is purged by carbon dioxide stored therein and discharged through the venting hole H.

According to the above-implemented configuration of the present disclosure, when a thermal event occurs in a specific battery cell 110, high-temperature gas or the like may be discharged more quickly through the venting hole H by carbon dioxide released from the cartridge 300. As a result, the internal pressure inside the battery module 10 may be reduced, thereby reducing the risk of explosion.

In addition, according to the above-implemented configuration of the present disclosure, it is possible to ensure safety and reliability of the battery module 10 by suppressing the occurrence of flame inside the module case 200 by removing high-temperature gas, which is one of the elements that may cause flame. In addition, according to the above-implemented configuration of the present disclosure, it is possible to maximally prevent thermal damage to other battery cells 110, thereby effectively securing thermal propagation prevention performance in the battery module 10.

Meanwhile, when gas is ejected from the battery cell 110, pieces of electrode plates or active materials inside the battery cell 110 may be heated to a high temperature and discharged to the outside, and these high-temperature particles may appear in the form of sparks. In this case, if the sparks ignites oxygen when they are emitted to the outside of the battery module 10, it may lead to a flame or develop into a fire. However, the battery module 10 may prevent ignition by including the cartridge 300.

Specifically, carbon dioxide stored inside the cartridge 300 is heavier than oxygen, so when it is released into a combustible material, it forms a non-combustible layer on the surface of the combustible material. Thus, if carbon dioxide is released from the cartridge 300, it is possible to cut off the supply of oxygen, one of the elements that cause flame.

According to the above-implemented configuration of the present disclosure, carbon dioxide released from the cartridge 300 may purge oxygen inside the module case 200. As a result, it is possible to prevent sparks from reacting with oxygen inside the module case 200 and generating flame by removing oxygen, which is one of the elements that cause flame.

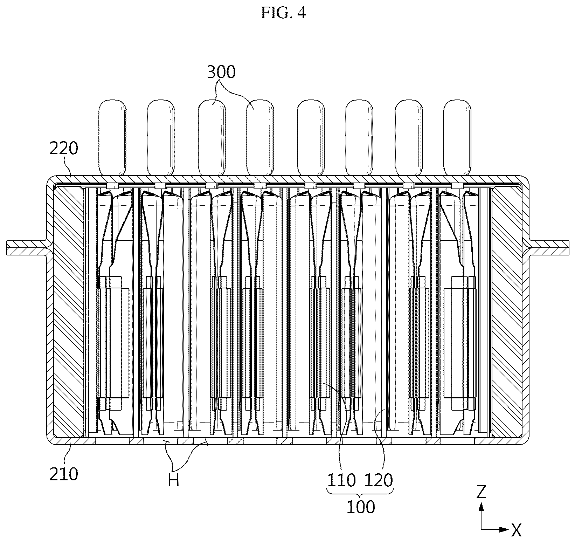

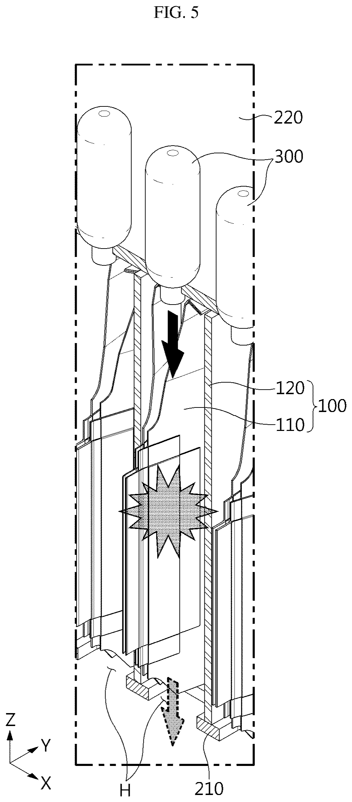

FIG. 4 is a cross-sectional view of a battery module on an X-Z plane according to an embodiment of the present disclosure, and FIG. 5 is a diagram illustrating the direction in which a cartridge operates in a battery module according to an embodiment of the present disclosure.

According to an embodiment of the present disclosure, the venting hole H of the battery module 10 may be provided on one side of the module case 200, and the cartridge 300 may be provided on the other side of the module case 200 to face the venting hole H. Here, the other side of the module case 200 may be in a position facing one side of the module case 200. For example, the venting hole H and the cartridge 300 may be provided on the upper and lower surfaces or both sides of the module case 200, respectively.

Meanwhile, referring to FIGS. 2 and 4, the module case 200 may include a module-bottom plate 210 and a module-top plate 220. The module-bottom plate 210 may be configured to support a plurality of battery cells 110 at the bottom of the cell stack 100. The venting holes H may be formed on the module-bottom plate 210. In addition, the module-top plate 220 may be coupled to the module-bottom plate 210. At least a portion of the cartridge 300 may be coupled to the module-top plate 220.

Specifically, referring to FIG. 2, the module case 200 of the battery module 10 according to this embodiment may be configured such that the module-bottom plate 210 and the module-top plate 220 cover the upper, lower, and both sides of the space provided inside the module case 200.

In addition, the module case 200 may include a pair of end plates 230 that cover the front and rear of the space, respectively. Accordingly, the module case 200 may be configured in a substantially cuboid shape.

Meanwhile, although not shown for convenience, the end plate 230 may have an inner side made of an insulating material and an outer side made of a metal material. In addition, the end plate 230 may have, at least in part, holes or slits through which positive and negative electrode terminals or connectors of the battery module 10 are exposed to the outside.

In addition, the module case 200 may be formed in various other forms. For example, the module case 200 may be configured in a form in which a left plate, a right plate, and a bottom plate are integrated with each other. In this case, the integrated case part may be referred to as a U-frame. A top plate may be welded to the top of the U-frame, thereby configuring a tubular shape. Alternatively, the module case 200 may include a box-shaped lower case in which a left plate, a right plate, a front plate, and a rear plate are integrated with each other, and an upper cover that closes the top opening of the lower case.

In the case of a module case 200 including such a U-frame, the cell stack 100 and the bus-bar frame assembly 500 may be assembled and disposed inside the U-frame, and then the module-top plate 220 may be coupled to the top of the U-frame, and subsequently the end plate 230 may be coupled thereto, thereby assembling the battery module 10.

Unlike this embodiment, the module case 200 may be provided as a mono-frame. Although not shown, the mono-frame is configured in an approximately square tube shape. In the case of a module case 200 including such a mono-frame, the cell stack 100 and the bus-bar frame assembly 500 may be assembled and inserted into the mono-frame in a sliding manner, and then the end plates 230 may be coupled to the openings on both sides of the mono-frame, thereby assembling the battery module 10.

Meanwhile, referring back to FIG. 2, thermal resin 400 having adhesion may be further included between the module-top plate 220 and the cell stack 100 and between the module-bottom plate 210 and the cell stack 100. The thermal resin 400 may improve the fixation of the battery cells 110. In addition, it may increase the heat transfer rate between the battery cells 110 and the module case 200, so that the heat may be more efficiently dissipated from the battery cells 110 to the outside during charging and discharging. In particular, since application of the thermal resin 400 removes empty space (air layer) between the module-bottom plate 210 and the battery cells 110, the heat dissipation efficiency of the battery cells 110 may be maximized.

According to an embodiment of the present disclosure, the venting hole H and the cartridge 300 may be arranged in a straight line in the vertical direction. For example, as shown in FIGS. 4 and 5, the cartridge 300 and the venting hole H may be disposed in a straight line in the Z-axis direction.

According to the above-implemented configuration of the present disclosure, carbon dioxide stored inside the cartridge 300 may be released directly toward the venting hole H (see the bold dark arrow in FIG. 5), thereby purging high-temperature gas discharged through the venting hole H or oxygen (see the dotted light arrow in FIG. 5). As a result, it is possible to ensure safety and reliability by eliminating elements that cause flames in the event of an abnormality in the battery cell 110 and preventing flames from occurring inside the module case 200.

FIG. 6 is a cross-sectional view of a battery module on an X-Y plane according to an embodiment of the present disclosure.

Meanwhile, as described above, the plurality of battery cells 110 may be arranged to be stacked in one direction in the cell stack 100. For example, referring to FIG. 2, in this embodiment, the battery cells 110 may be arranged to be stacked in the horizontal direction, for example, in the left/right direction (X-axis direction) while standing upright in the vertical direction (Z-axis direction).

In this implemented configuration, referring to FIG. 6, the cell stack 100 may further include a blocking member 120. The blocking member 120 may be provided between battery cells 110. In particular, a plurality of blocking members 120 may be included in one cell stack 100. In this case, the plurality of blocking members 120 may be arranged to be spaced a predetermined distance apart from each other in one direction, that is, in the stacking direction (X-axis direction) of the battery cells 110. In addition, the plurality of blocking members 120 may be provided at regular intervals between the battery cells 110 (e.g., at every one battery cell or every two or more battery cells 110). For example, in the case where the battery cell 110 is configured as a pouch-type battery cell as shown in FIG. 2, the blocking member 120 may come into contact with at least some of the plurality of pouch-type battery cells 110. In this embodiment, a plurality of blocking members 120 may be provided to be disposed at every two or more battery cells 110.

This blocking member 120 may be configured in the form of a pad with compressive force and may be made of a material with excellent heat resistance and/or fire resistance, for example, silicone, aerogel, mica, or the like. Since the blocking member 120 is a pad with compressive force, it may contribute to the structural rigidity of the battery cells 110 by compressing the battery cells 110 when the battery cells 110 swell.

In addition, the blocking member 120 having heat resistance and/or fire resistance may execute a thermal barrier function to prevent heat or flame, generated from the battery cell 110 in the internal ignition of the battery module 10, from propagating in the stacking direction of the battery cells 110. Accordingly, heat propagation to neighboring battery cells 110 may be minimized. The blocking member 120 may block high-temperature gases, flames, and discharges generated from the battery cell 110, as well as heat. As a result, the blocking member 120 may prevent flames or the like from transferring between the battery cells 110 by partitioning or separating the battery cells 110.

Meanwhile, in this implemented configuration, a plurality of venting holes H may be provided. In particular, the venting hole H may be provided between adjacent blocking members 120 among the plurality of blocking members 120.

According to this configuration, gas emitted from the battery cell 110 accommodated between adjacent blocking members 120 may be discharged to the outside of the module case 200 only through the venting hole H located between the adjacent blocking members 120. That is, since the entire surrounding area of the venting hole H is blocked, directional venting of gas may be induced more effectively in the downward direction. In addition, according to the above-implemented configuration of the present disclosure, it is possible to prevent gas or the like from passing over to another blocking member 120 adjacent to the blocking member 120.

In addition, a plurality of cartridges 300 may be provided. The cartridges 300 may be arranged to face the plurality of venting holes H, respectively. That is, as described above, the venting holes H and the cartridges 300 may be arranged in a straight line in the vertical direction between adjacent blocking members 120 among the plurality of blocking members 120.

According to the above-implemented configuration of the present disclosure, carbon dioxide released from the cartridge 300 disposed between adjacent blocking members 120 may be discharged only toward the venting hole H located between the adjacent blocking members 120. That is, since the entire surrounding area of the venting hole H is blocked, carbon dioxide may be discharged only through the venting hole H facing a specific cartridge 300, thereby more effectively purging oxygen, gas, or the like between the adjacent blocking members 120.

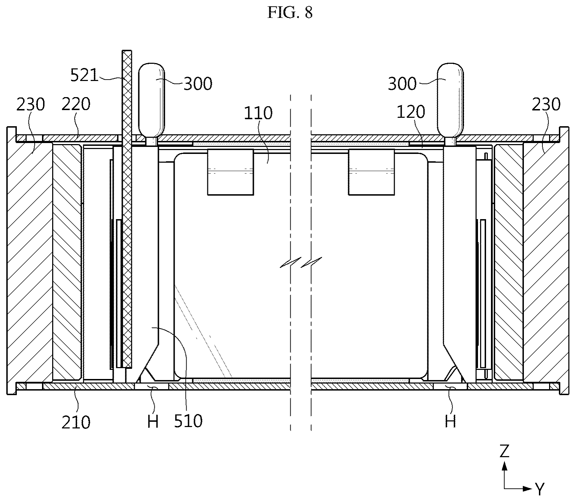

FIG. 7 is an exploded perspective view of a cell stack and a bus-bar frame assembly of a battery module according to an embodiment of the present disclosure, and FIG. 8 is a cross-sectional view of a battery module on a Y-Z plane according to an embodiment of the present disclosure.

Meanwhile, a plurality of venting holes H and cartridges 300 may be provided on at least one side of the cell stack 100. In the present embodiment, as shown in FIG. 8, the venting holes H and cartridges 300 may be provided on both sides of the cell stack 100 in the forward/backward direction (Y-axis direction).

The battery module 10 of the present disclosure may further include a bus-bar frame assembly 500. The bus-bar frame assembly 500 may be provided inside the module case 200 to cover at least one side of the cell stack 100. In this embodiment, as shown in FIG. 7, the bus-bar frame assemblies 500 may be coupled to the front and rear ends of the cell stack 100.

Meanwhile, each of the plurality of battery cells 110 may have an electrode lead 112. Specifically, the plurality of battery cells 110 may include an electrode assembly, a cell case 111 accommodating the electrode assembly, and an electrode lead 112 connected with the electrode assembly and extending to the outside of the cell case 111 to function as an electrode terminal.

A pair of electrode leads 112 may be provided, and the pair of electrode leads 112 may extend from both ends of the battery cell 110, that is, in the longitudinal direction (the ±Y-axis directions). In this case, the pair of electrode leads 112 may be a positive electrode lead and a negative electrode lead. If necessary, the battery cell 110 may have two electrode leads 112 disposed only at one end thereof in the Y-axis direction, for example, the +Y-axis direction.

Referring to FIG. 7, the bus-bar frame assembly 500 will be described in more detail. The bus-bar frame assembly 500 may include a bus-bar frame 510 and a plurality of bus-bars 520. The bus-bar frame 510 may be provided to be substantially coupled to the front open end and the rear open end of the cell stack 100. The bus-bar frame 510 may be provided with slits through which the electrode lead 112 of the battery cell 110 may extend in the +Y-axis or -Y-axis direction. In addition, the bus-bar frame 510 may be made of, for example, a plastic material with electrical insulation properties, and may be configured such that the bus-bar 520 may be attached to its outer surface.

In addition, the bus-bar frame 510 may be press-fitted to the front or rear end of the cell stack 100. For example, the bus-bar frame 510 may have a coupling groove 511 on the inner surface facing the cell stack 100.

Referring to FIGS. 6 and 7, the coupling groove 511 may be provided to insert the distal end of the blocking member 120 to a predetermined depth. In this case, the coupling groove 511 may be configured to press-fit the distal end of the blocking member 120 thereto.

A plurality of coupling grooves 511 may be provided in the stacking direction of the blocking member 120. The number of coupling grooves 511 may be configured as needed depending on the number of blocking members 120 stacked. Therefore, in the battery module 10 according to the present embodiment, since the bus-bar frames 510 having the coupling grooves 511 are coupled to the front and rear ends of the cell stack 100, the stacked blocking members 120 may be stably stored in the module case 200 even without separate binding members.

Meanwhile, the plurality of bus-bars 520 are means for connecting the battery cells 110 in series and/or parallel, and may be made of a metal material such as copper, aluminum, nickel, or the like, and may be configured in the form of a bar. The electrode leads 112 of the battery cells 110 may extend to the outside of the bus-bar frame 510 by passing through the slits of the bus-bar frame 510, and the extended portion may be attached to the surface of the bus-bar 520 by welding or other methods. When the electrode leads 112 of the battery cells 110 and the bus-bars 520 are welded in a predetermined pattern at the front and rear ends of the cell stack 100, the battery cells 110 may be connected in series and/or parallel.

Among the bus-bars 520 to which the electrode leads 112 of the battery cells 110 are attached, two bus-bars 520 are used as electrode terminals of the battery module 10. Here, the bus-bar 520 used as the electrode terminal of the battery module 10 is specifically called a terminal bus-bar 521, and the terminal bus-bars 521 includes a positive electrode terminal bus-bar and a negative electrode terminal bus-bar. For example, as shown in FIG. 7, the terminal bus-bar 521 may be configured to extend more to have a length greater than those of other bus-bars 520, so that one end thereof is exposed to the outside of the module case 200 as shown in FIG. 1.

In this implemented configuration, referring to FIG. 8, the module case 200 is an element that has an inner space to accommodate the cell stack 100 and the bus-bar frame assembly 500 and protects the cell stack 100 from the outside. This module case 200 is preferably made of a metal material with high mechanical rigidity. However, the module case 200 is not necessarily made of a metal material.

Meanwhile, referring to FIG. 8, the plurality of venting holes H and cartridges 300 according to an embodiment of the present disclosure may be provided inward from the bus-bar frame assembly 500. According to the above-implemented configuration of the present disclosure, in the event of an abnormality in the battery cell 110, the cartridge 300 may operate to release carbon dioxide before high-temperature gas or the like exits through the slit of the bus-bar frame 510, so that high-temperature gas or the like may be guided to be discharged quickly through the venting hole H.

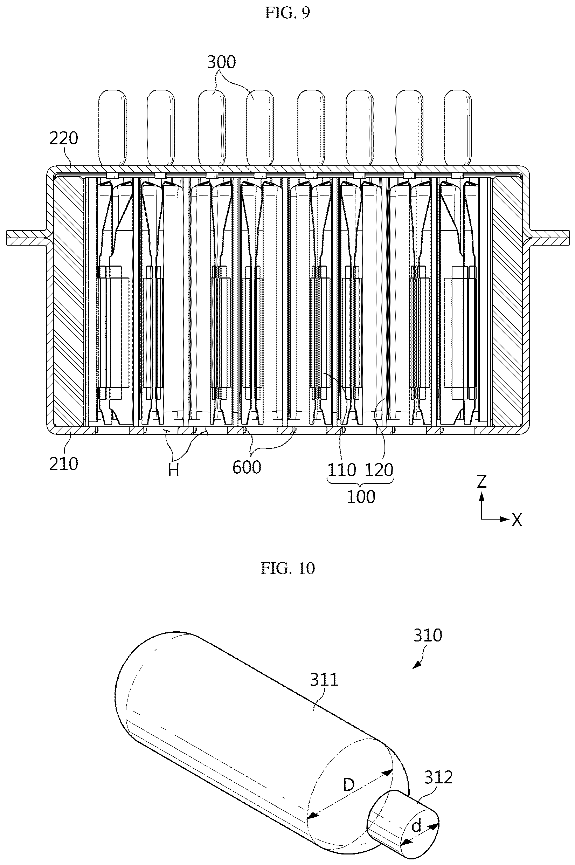

FIG. 9 is a diagram illustrating a gas sensor that may be included in a battery module according to an embodiment of the present disclosure.

Meanwhile, the battery module 10 according to an embodiment of the present disclosure may further include a gas sensor 600. The gas sensor 600 may be configured to detect gas generated from the battery cell 110. The gas sensor 600 may be provided inside the module case 200.

If high-temperature venting gas is continuously discharged from the battery cell 110, thermal runaway may occur inside the module case 200 to develop into explosion, instead of sequential ignition in other adjacent battery cells 110, causing a bigger problem. Accordingly, the battery module 10 of the present disclosure may be configured to release carbon dioxide stored inside the cartridge 300 toward the venting hole H when the gas sensor 600 detects the generation of the gas. That is, the operation of the cartridge 300 may be determined depending on whether or not the gas sensor 600 detects gas.

According to the above-implemented configuration of the present disclosure, the cartridge 300 may be selectively operated only when there is a serious risk such as explosion depending on whether or not the gas sensor 600 detects gas inside the module case 200, thereby effectively discharging venting gas through the venting hole H. Accordingly, according to the above-mentioned configuration of the present disclosure, flame may be suppressed by discharging venting gas, which is one of the elements causing flame, to the outside of the module case 200.

Referring to FIG. 9, the gas sensor 600 may be provided in the venting hole H. The gas sensor 600, the cartridge 300, and the venting hole H may be disposed side by side in one direction. For example, as shown in FIG. 9, the gas sensor 600, the cartridge 300, and the venting hole H may be disposed in the vertical direction (Z-axis direction). According to the above-implemented configuration of the present disclosure, the gas sensor 600 may be provided inside the venting hole H, which is a passage through which venting gas is discharged, and may detect venting gas discharged through the venting hole H.

A plurality of gas sensors 600 may be provided, and the plurality of gas sensors 600 may be respectively provided in the plurality of venting holes H. According to the above-implemented configuration of the present disclosure, when venting gas is generated from a specific battery cell 110, the gas sensor 600 provided in the venting hole H facing the specific battery cell 110 may solely detect the venting gas. Accordingly, no matter which battery cell 110 generates venting gas, the venting gas may be efficiently discharged to the outside of the module case 200 and removed.

FIG. 10 is a diagram illustrating the detailed structure of a cartridge that may be included in a battery module according to an embodiment of the present disclosure.

The cartridge 300 may include a cylinder unit 310. The cylinder unit 310 may include a storage portion 311 having a space for storing carbon dioxide therein, and a release portion 312 extending from the storage portion 311 to release carbon dioxide. As shown in FIGS. 4 and 8, the storage portion 311 may be coupled to the module-top plate 220. In this case, the release portion 312 may be configured to protrude from the storage portion 311 toward the inside of the module case 200, that is, toward the venting hole H.

The diameter d of the release portion 312 may be configured to be smaller than the diameter D of the storage portion 311. The release portion 312 may be made of a material with a lower melting point than the storage portion 311. The melting point of the release portion 312 may be similar to the temperature of flame, so that it melts and carbon dioxide is released when flame occurs.

According to the above-implemented configuration of the present disclosure, it is possible to suppress the occurrence of flame by instantly purging and removing venting gas and oxygen, which are elements causing flame, using carbon dioxide rapidly released through the release portion 312 of the cartridge 300.

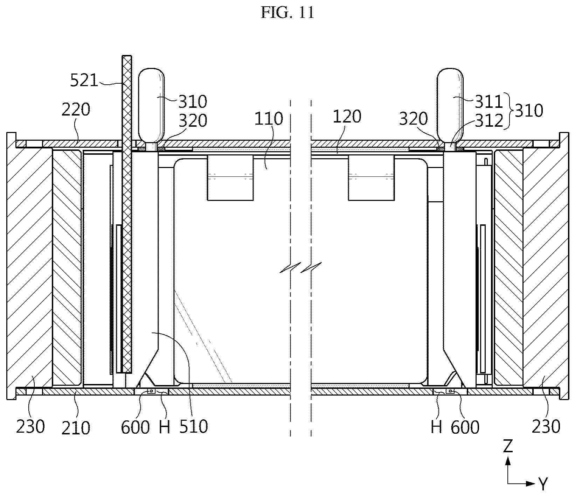

FIG. 11 is a diagram illustrating the location of an operation unit of a cartridge that may be included in a battery module according to an embodiment of the present disclosure.

Meanwhile, the cartridge 300 may further include an operation unit 320. The operation unit 320 may be connected to the cylinder unit 310. The operation unit 320 may be provided as any configuration that allows carbon dioxide to be released from the cylinder unit 310.

In addition, the operation unit 320 may be configured to be electrically connected to the gas sensor 600. Accordingly, even if the operation unit 320 and the gas sensor 600 are not directly and physically connected, if the gas sensor 600 detects the generation of the gas, the operation unit 320 may be configured to release carbon dioxide from the cylinder unit 310.

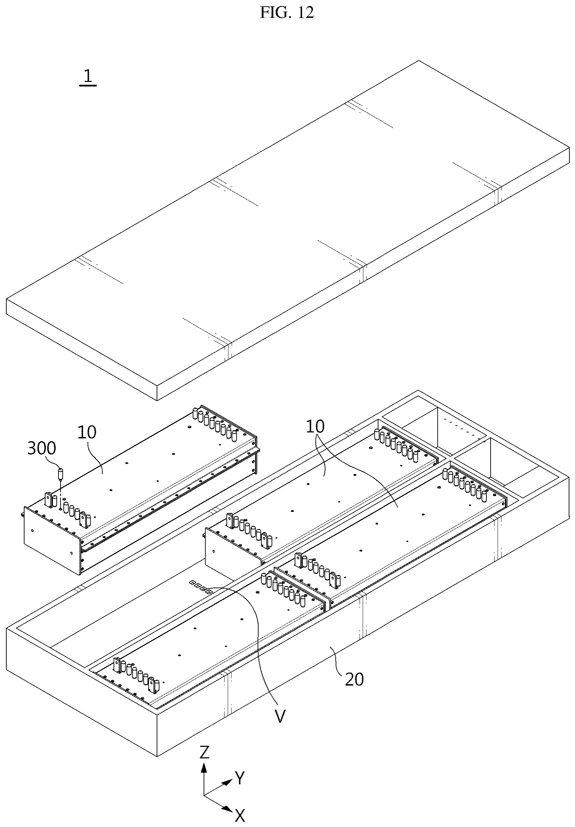

For example, a battery pack (see 1 in FIG. 12, which will be described later) including a plurality of battery modules 10 according to an embodiment of the present disclosure may include a battery management system (BMS) or a battery management unit (BMU) to process a variety of information, and the BMS or BMU may exchange information with various control devices through a communication bus such as an SPI or CAN interface. In addition, the BMS or BMU may exchange information with each battery module 10 or a cell supervision circuit (CSC) of each battery module 10.

The information detected by the gas sensor 600 according to an embodiment of the present disclosure may constitute sensing data of the CSC. With this implemented configuration, the information detected by the gas sensor 600 may be transmitted to the BMS or BMU. The BMS or BMU may be connected to the operation unit 320 through a communication bus such as an SPI or CAN interface. If the information detected by the gas sensor 600 is transmitted to the BMS or BMU, and the BMS and BMU may transmit a driving signal of the operation unit 320 to the operation unit 320. The operation unit 320 receiving the driving signal may be configured to release carbon dioxide from the cylinder unit 310.

As shown in FIG. 11, the operation unit 320 according to an embodiment of the present disclosure may be provided in a space provided between the module-top plate 220 and the cell stack 100. The operation unit 320 may be attached to the lower portion of the module-top plate 220. For example, a plurality of operation units 320 may be provided to be respectively connected to a plurality of cylinder units 310.

According to the above-implemented configuration of the present disclosure, since the plurality of operation units 320 is respectively connected to the plurality of cylinder units 310, carbon dioxide may be released from a specific cylinder unit 310 depending on the location of a specific battery cell 110 where venting gas or the like is generated, thereby effectively suppressing flame.

FIG. 12 is a perspective view of a battery pack including a battery module according to an embodiment of the present disclosure.

Referring to FIG. 12, a battery pack 1 according to an embodiment of the present disclosure may include one or more battery modules 10 according to an embodiment of the present disclosure described above. According to an embodiment of the present disclosure, a plurality of battery modules 10 may be provided in the battery pack 1. For example, a plurality of battery modules 10 may be arranged side by side in the horizontal direction (X-axis direction and Y-axis direction) as shown in FIG. 12.

The battery pack 1 according to the present disclosure may further include a pack case 20 to accommodate a BMS current sensor for integrated control of charging and discharging of one or more battery modules 10, a fuse, or the like, and the above-mentioned element. The pack case 20 may be configured to accommodate a plurality of battery modules 10.

In addition, the battery pack 1 according to an embodiment of the present disclosure may further include a venting device V. The venting device V may be provided in the pack case 20. The venting device V may be configured to discharge gas generated from the battery module 10 to the outside of the pack case 20 in the event of an abnormality in the battery module 10. For example, as shown in FIG. 12, a plurality of venting devices V may be provided on the bottom surface of the pack case 20, and the venting devices V may communicate with the venting holes H of the battery module 10. According to the above-implemented configuration of the present disclosure, venting gas discharged through the venting hole H may be discharged downward through the venting device V, thereby enabling directional venting.

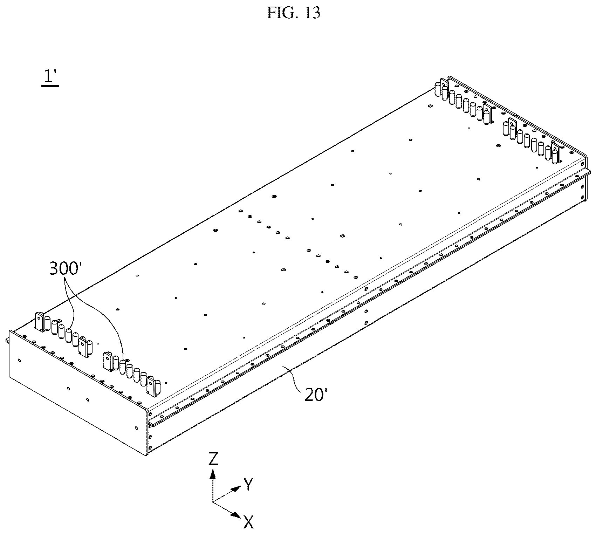

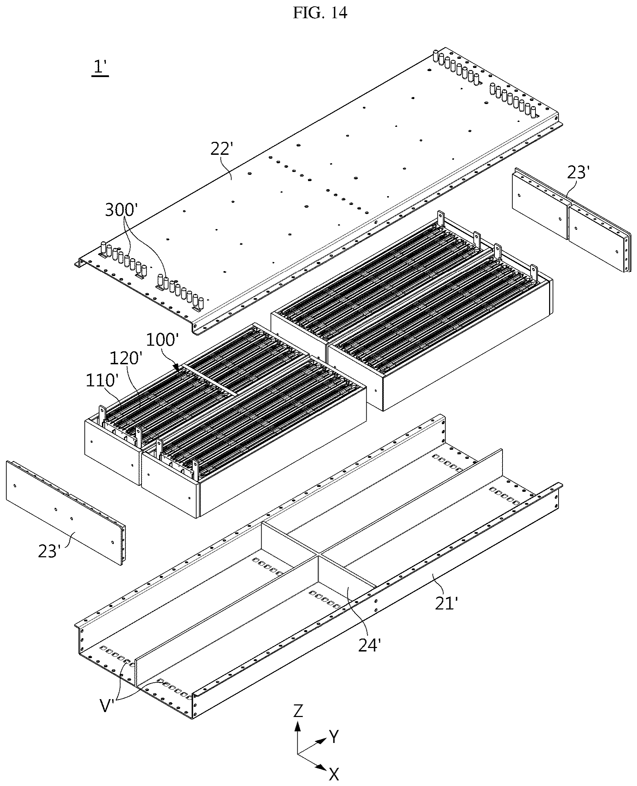

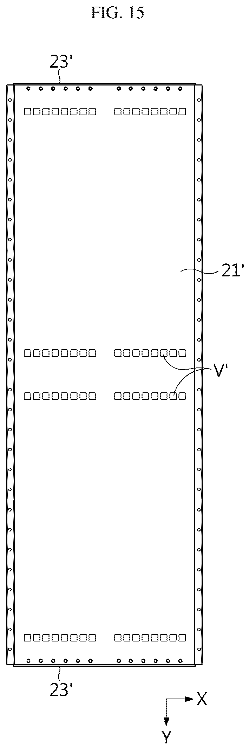

FIG. 13 is a perspective view of a battery pack according to another embodiment of the present disclosure, FIG. 14 is an exploded perspective view of a battery pack according to another embodiment of the present disclosure, and FIG. 15 is a bottom view of a battery pack according to another embodiment of the present disclosure.

A battery pack 1' according to another embodiment of the present disclosure will be described with reference to FIGS. 13 to 15. The same reference numerals as those in the above-described embodiment indicate the same members, and redundant descriptions of the same members will be omitted and a description will be made based on the differences from the above-described embodiment.

According to another embodiment of the present disclosure, the battery pack 1' according to another embodiment of the present disclosure may include a cell stack 100', a pack case 20', a venting device V', and a cartridge 300'.

The cell stack 100' according to another embodiment of the present disclosure may be accommodated in the pack case 20'. That is, the pack case 20' according to another embodiment of the present disclosure may be configured to accommodate the cell stack 100'. Although the drawing shows the example in which the cell stack 100' is stored in the module case without the module-top plate 220 described in FIG. 2, the cell stack 100' may be directly stored in the pack case 20' without a separate module case to be implemented in a so-called cell-to-pack structure.

In addition, the battery pack 1' may further include a venting device V'. The venting device V' may be provided in the pack case 20'. The venting device V' may be configured to discharge gas generated from the battery cell 110' to the outside of the pack case 20' in the even of an abnormality in the battery cell 110'. For example, as shown in FIG. 14, a plurality of venting devices V' may be formed on the bottom surface of the pack case 20', enabling directional venting in the downward direction through the venting devices V'.

The battery pack 1' according to another embodiment of the present disclosure may further include a cartridge 300'. The cartridge 300' may be configured to release carbon dioxide stored therein toward the venting device V'. The cartridge 300' may be provided at a position facing the venting device V' in parallel such that high-temperature gas or the like may be discharged more quickly through the venting device V' when a thermal event occurs in a specific battery cell 110'. As a result, the internal pressure inside the pack case 20' may be reduced, thereby reducing the risk of explosion.

In addition, according to the above-implemented configuration of the present disclosure, it is possible to ensure safety and reliability by suppressing the occurrence of flame inside the pack case 20' by removing high-temperature gas, which is one of the elements causing flame.

Meanwhile, when gas is ejected from the battery cell 110', pieces of electrode plates or active materials inside the battery cell 110' may be heated to a high temperature and discharged to the outside, and these high-temperature particles may appear in the form of sparks. In this case, if the sparks ignites oxygen when they are emitted to the outside of the battery cell 110', it may lead to a flame or develop into a fire.

Carbon dioxide stored inside the cartridge 300' is heavier than oxygen, so when it is released into a combustible material, it forms a non-combustible layer on the surface of the combustible material. Thus, if carbon dioxide is released from the cartridge 300', it is possible to cut off the supply of oxygen, which is one of the elements that cause flame. Therefore, according to the above-implemented configuration of the present disclosure, carbon dioxide released from the cartridge 300' may purge oxygen inside the pack case 20'. As a result, it is possible to prevent sparks from reacting with oxygen inside the pack case 20' and generating flame by removing oxygen, which is one of the elements that cause flame.

Meanwhile, the pack case 20' may include a pack-bottom frame 21' and a pack-top frame 22'. The pack-bottom frame 21' may be configured to support the bottom of the cell stack 100'. The pack-bottom frame 21' may be equipped with a venting device V'.

The pack-top frame 22' may be coupled to the pack-bottom frame 21'. At least a portion of the cartridge 300' may be coupled to the pack-top frame 22'. In this case, the venting device V' and the cartridge 300' may be provided to face each other in the vertical direction.

In addition, the pack case 20' may include a pair of side frames 23' that cover the front and rear sides of the cell stack 110', respectively. Accordingly, the pack case 20' may be configured in a substantially cuboid shape.

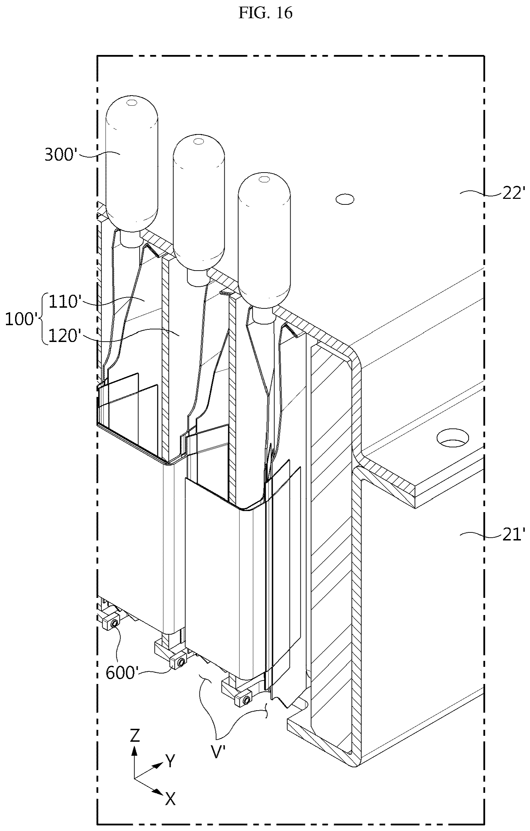

FIG. 16 is a diagram illustrating the direction in which a cartridge operates in a battery pack according to another embodiment of the present disclosure.

In the battery pack 1' according to another embodiment of the present disclosure, the cell stack 100' may include a plurality of blocking members 120' arranged in one direction between at least one battery cell 110'. The plurality of blocking members 120' may be provided inside the pack case 20'. A plurality of venting device V' may be provided. In particular, the venting device V' may be provided between adjacent blocking members among the plurality of blocking members 120'.

Specifically, referring to FIG. 15, the venting devices V' may be disposed at regular intervals in the left/right direction (X-axis direction) at positions close to both ends of the pack-bottom frame 21' in the longitudinal direction (Y-axis direction).

In addition, according to the present disclosure, a plurality of cartridges 300' may be provided. Referring to FIG. 16, the cartridge 300' may be provided to respectively face the plurality of venting devices V'. That is, the venting device V' and the cartridge 300' may be disposed in a straight line in the vertical direction between adjacent blocking members 120' among the plurality of blocking members 120'.

According to the above-implemented configuration of the present disclosure, carbon dioxide stored inside the cartridge 300' may be released directly toward the venting device V', thereby purging high-temperature gas discharged through the venting device V' or oxygen. As a result, it is possible to ensure safety and reliability by eliminating elements that cause flames in the event of an abnormality in the battery cell 110' and preventing flames from occurring inside the pack case 20'.

In addition, according to this configuration, gas or the like emitted from the battery cell 110' accommodated between adjacent blocking members 120' may be discharged downward from the pack case 20' only through the venting device V' located between the specific adjacent blocking members 120'. That is, since the entire surrounding area of the venting device V' is blocked, carbon dioxide may be discharged through the venting device V' facing the specific cartridge 300', thereby more effectively purging oxygen and gas between the adjacent blocking members 120'. In addition, according to the above-implemented configuration of the present disclosure, it is possible to prevent gas or the like from passing over to another blocking member 120' adjacent to the blocking member 120'.

Meanwhile, a plurality of venting devices V' and cartridges 300' may be provided on at least one side of the cell stack 100'. In the present embodiment, as shown in FIG. 14, the venting devices V' and the cartridges 300' may be provided on both sides of the cell stack 100' in the forward/backward direction (Y-axis direction).

Meanwhile, referring to FIG. 14, a plurality of cell stacks 100' may be provided. The pack case 20' may further include a partition 24'. The partition 24' may be provided in the pack-bottom frame 21'. The partition 24' may be provided inside the pack-bottom frame 21' so as partition the plurality of cell stacks 100'. A plurality of partitions 24' may be provided to be spaced a predetermined distance apart from each other. For example, the partition 24' may include a plurality of walls extending in the X-axis or Y-axis direction.

According to the above-implemented configuration of the present disclosure, since the plurality of cell stacks 100' is separated by the partitions 24', even if an abnormal situation happens in any one cell stack 100', it is possible to prevent thermal propagation to other cell stacks 100'.

Meanwhile, referring to FIG. 16, the battery pack 1' according to an embodiment of the present disclosure may further include a gas sensor 600'. The gas sensor 600' may be configured to detect gas generated from the battery cell 110'. The gas sensor 600' may be provided inside the pack case 20'.

If high-temperature venting gas is continuously discharged from the battery cell 110', thermal runaway may occur inside the pack case 20' to develop into explosion, instead of sequential ignition in other adjacent battery cells 110', causing a bigger problem. Accordingly, the battery pack 1' of the present disclosure may be configured to release carbon dioxide stored inside the cartridge 300' toward the venting device V' when the gas sensor 600' detects the generation of the gas. That is, the operation of the cartridge 300' may be determined depending on whether or not the gas sensor 600' detects gas.

According to the above-implemented configuration of the present disclosure, the cartridge 300' may be selectively operated only when there is a serious risk such as explosion depending on whether or not the gas sensor 600' detects gas inside the pack case 20', thereby effectively discharging venting gas through the venting device V'. Accordingly, according to the above-mentioned configuration of the present disclosure, flame may be suppressed by discharging venting gas, which is one of the elements causing flame, to the outside of the pack case 20'.

Referring to FIG. 16, the gas sensor 600' may be provided in the venting device V'. The gas sensor 600', the cartridge 300', and the venting device V' may be disposed side by side in one direction. For example, as shown in FIG. 16, the gas sensor 600', the cartridge 300', and the venting device V' may be disposed side by side in the vertical direction (Z-axis direction). According to the above-implemented configuration of the present disclosure, the gas sensor 600' may be provided inside the venting device V', which is a passage through which venting gas is discharged, and may detect venting gas discharged through the venting device V'.

A plurality of gas sensors 600' may be provided, and the plurality of gas sensors 600' may be respectively provided in the plurality of venting device V'. According to the above-implemented configuration of the present disclosure, when venting gas is generated from a specific battery cell 110', the gas sensor 600' provided in the venting device V' facing the specific battery cell 110' may solely detect the venting gas. Accordingly, no matter which battery cell 110' generates venting gas, the venting gas may be efficiently discharged to the outside of the pack case 20' and removed.

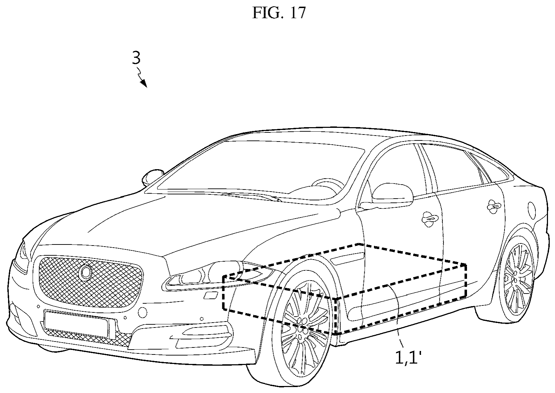

FIG. 17 is a perspective view of a vehicle including a battery pack according to an embodiment of the present disclosure.

Referring to FIG. 17, the vehicle 3 according to an embodiment of the present disclosure may include one or more battery packs 1 or 1' according to an embodiment of the present disclosure. The vehicle 3 according to the present disclosure may be, for example, an electric vehicle, a hybrid vehicle or a plug-in hybrid vehicle. The vehicle 3 includes a four-wheeled vehicle and a two-wheeled vehicle. The vehicle 3 drives by receiving power from the battery pack 1 or 1' according to an embodiment of the present disclosure.

Since the battery pack 1 or 1' has the various effects mentioned above, the vehicle 3 including the same may also have those effects. Specifically, the battery pack 1 or 1' may suppress the occurrence of flame inside the module case 200 or pack case 20 by removing elements that may cause flame in the event of an abnormality in the battery cell 110. In addition, it is possible to quickly discharge, in the event of an abnormality in the battery cell 110, venting gas to the outside of the module case 200 or pack case 20, thereby suppressing the flame, and maximally prevent thermal damage to other battery cells 110, thereby effectively securing thermal propagation prevention performance in a module or pack. Accordingly, the vehicle 3 including the battery pack 1 or 1' also has advantages in safety and reliability.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery module comprising:
a cell stack comprising a plurality of battery cells arranged to be stacked in one direction;
a module case configured to accommodate the cell stack;
a venting hole formed on the module case and configured to discharge gas generated from the battery cell to the outside of the module case; and
a cartridge having at least a portion coupled to the module case and configured to release carbon dioxide stored therein toward the venting hole.

2. The battery module according to claim 1,
wherein the venting hole is provided on one side of the module case, and
wherein the cartridge is provided on the other side of the module case so as to face the venting hole.

3. The battery module according to claim 2,
wherein the module case comprises
a module-bottom plate configured to support the plurality of battery cells at the bottom of the cell stack and having the venting hole formed thereon, and
a module-top plate coupled to the module-bottom plate and to which at least a portion of the cartridge is coupled.

4. The battery module according to claim 3,
wherein the venting hole and the cartridge are disposed in a straight line in a vertical direction.

5. The battery module according to claim 2,
wherein the cell stack comprises
a plurality of blocking members arranged in one direction between at least one of the plurality of battery cells, and
wherein a plurality of venting holes is provided between adjacent blocking members among the plurality of blocking members.

6. The battery module according to claim 5,
wherein a plurality of cartridges is provided to respectively face the plurality of venting holes.

7. The battery module according to claim 6,
wherein the plurality of venting holes and cartridges are provided on at least one side of the cell stack.

8. The battery module according to claim 7,
further comprising a bus-bar frame assembly provided inside the module case and configured to cover at least one side of the cell stack,
wherein the plurality of venting holes and cartridges are provided inward from the bus-bar frame assembly.

9. The battery module according to claim 1,
further comprising a gas sensor provided inside the module case and configured to detect gas generated from the battery cell,
wherein, if the gas sensor detects the generation of the gas, carbon dioxide stored inside the cartridge is released toward the venting hole.

10. The battery module according to claim 9,
wherein the cartridge comprises
a cylinder unit comprising a storage portion having a space for storing carbon dioxide therein and a release portion extending from the storage portion and configured to release carbon dioxide.

11. The battery module according to claim 10,
wherein the diameter of the release portion is smaller than the diameter of the storage portion.

12. The battery module according to claim 10,
wherein the cartridge
further comprises an operation unit connected to the cylinder unit and configured to cause the cylinder unit to release carbon dioxide if the gas sensor detects the generation of the gas.

13. The battery module according to claim 12,
wherein the operation unit is configured to be electrically connected to the gas sensor.

14. A battery pack comprising the battery module according to any one of claims 1 to 13.

15. A battery pack comprising:
a cell stack comprising a plurality of battery cells arranged to be stacked in one direction;
a pack case configured to accommodate the cell stack;
a venting device provided in the pack case and configured to discharge gas generated from the battery cell to the outside of the pack case; and
a cartridge having at least a portion coupled to the pack case and configured to release carbon dioxide stored therein toward the venting device.

16. The battery pack according to claim 15,
wherein the pack case comprises
a pack-bottom frame configured to support the bottom of the cell stack and having the venting device, and
a pack-top frame coupled to the pack-bottom frame and to which at least a portion of the cartridge is coupled.

17. The battery pack according to claim 16,
wherein the venting device and the cartridge are provided to face each other in a vertical direction.

18. The battery pack according to claim 15,
wherein the cell stack comprises
a plurality of blocking members arranged in one direction between at least one of the plurality of battery cells, and
wherein a plurality of venting devices is provided between adjacent blocking members among the plurality of blocking members.

19. The battery pack according to claim 18,
wherein a plurality of cartridges is provided to respectively face the plurality of venting devices.

20. The battery pack according to claim 19,
wherein the plurality of venting devices and cartridges are provided on at least one side of the cell stack.

21. The battery pack according to claim 15,
further comprising a gas sensor provided inside the pack case and configured to detect gas generated from the battery cell,
wherein, if the gas sensor detects the generation of the gas, carbon dioxide stored inside the cartridge is released toward the venting device.

22. The battery pack according to claim 16,
wherein a plurality of cell stacks is provided, and
wherein the pack case
further comprises a partition provided to partition the plurality of cell stacks inside the pack-bottom frame.

23. A vehicle comprising a battery pack according to claim 14.

24. A vehicle comprising a battery pack according to any one of claims 15 to 22.
